# EUROPÄISCHE PATENTSCHRIFT

(11) **EP 0 988 721 B1**
(45) Veröffentlichungstag und Bekanntmachung des Hinweises auf die Patenterteilung: **12.12.2001**
(21) Anmeldenummer: 98936111.8
(22) Anmeldetag: 05.06.1998
(51) Int. Cl.: H04B 7/26

(54) **SYNCHRONISATION VON DECT-SYSTEMEN DURCH DRIFT DER BASISSTATIONEN**
DECT SYSTEM SYNCHRONIZATION BY BASE STATION DRIFT
SYNCHRONISATION DE SYSTEMES DECT PAR DERIVE DES STATIONS DE BASE

(30) Priorität: 11.06.1997 DE 19724674
(43) Veröffentlichungstag der Anmeldung: 29.03.2000
(73) Patentinhaber: SIEMENS AKTIENGESELLSCHAFT, 80333 München (DE)
(72) Erfinder: EUSCHER, Christoph, D-46414 Rhede (DE)
(86) Internationale Anmeldenummer: DE9801550
(87) Internationale Veröffentlichungsnummer: WO9857448

(56) Entgegenhaltungen:
- EP-A- 0 592 209
- US-A- 5 528 597
- YOSHIHIKO AKAIWA ET AL: "AUTONOMOUS DECENTRALIZED INTER-BASE-STATION SYNCHRONIZATION FOR TDMA MICROCELLULAR SYSTEMS" GATEWAY TO THE FUTURE - TECHNOLOGY IN MOTION, ST. LOUIS, MAY 19 - 22, 1991, Nr. CONF. 41, 19. Mai 1991, Seiten 257-262, XP000260188 INSTITUTE OF ELECTRICAL AND ELECTRONICS ENGINEERS

## Beschreibung

Die vorliegende Erfindung bezieht sich auf eine Basisstation und ein Verfahren zur Synchronisierung von mehreren Funkübertragungssystemen, die jeweils aus wenigstens einer Basis-station bestehen, an die mehrere Mobilteile anbindbar sind, um Daten in Zeitschlitzen zu übertragen. Die vorliegende Erfindung bezieht sich dabei insbesondere auf die Synchronisierung von sogenannten DECT-Systemen.

Als ein Beispiel für ein Funkübertragungssystem, bei dem Daten zwischen einer Basisstation und mehreren Mobilteilen in Zeitschlitzen übertragen werden, ist das sogenannte DECT(Digital Enhanced Cordless Telecommunications)-System bekannt. Dieser digitale Standard soll die bisherige analoge Schnurlos-Telefon-Norm CT1 ablösen. DECT bietet eine schnurlose Verbindung zwischen dem Mobilteil und der Basisstation bei Reichweiten von maximal 300 Metern. Außerdem ermöglicht DECT das sogenannte Time Division Multiple Access (TDMA)-Verfahren, wodurch eine 12-fache Nutzung eines Funkkanals ermöglicht wird. So ermöglicht DECT Anwendungen mit hoher Benutzerdichte. Es können also bis zu 12 Anwender zur gleichen Zeit telefonieren, wobei die Basisstation wegen der 12 TDMA-Zeitschlitze mit nur einem Hochfrequenzteil auskommt. Ein entsprechendes Analogsystem bräuchte für diese Anwendung 12 Funkteile in der Basisstation und wäre dementsprechend aufwendig und teuer.

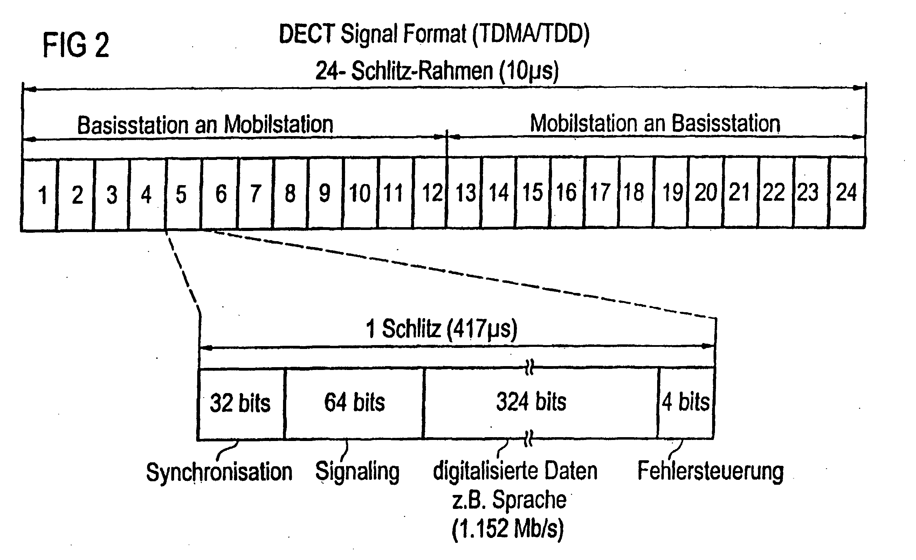

In Figur 2 der beiliegenden Zeichnungen ist das Signalformat des DECT-Standards dargestellt. Das DECT-System belegt europaweit einheitlich 10 Frequenzen im Bereich von 1,88 bis 1,90 Gigahertz. Jede Frequenz wird durch ein Zeit-Duplex-Verfahren (Time Division Duplex, TDD) sowohl zum Senden wie auch zum Empfangen des digitalen Datenstroms verwendet. Dabei wiederholt sich periodisch ein Zeitrahmen (Frame) von 10 Millisekunden. Der Zeitrahmen besteht zu gleichen Teilen aus einem Sende- und einem Empfangsabschnitt. Diese sind weiter in 12 Zeitschlitze (bursts) aufgeteilt, wobei jeder burst die komprimierten Daten einer Sprach- oder Datenverbindung enthält. Die pro Verbindung erreichte nutzbare Datenübertragungsrate beträgt 32 Kilobit/Sekunde. Insgesamt werden die Daten im Zeitrahmen mit 1,152 Kilobit/Sekunde übertragen. Innerhalb der Reichweite einer Basisstation (250 Milliwatt Sendeleistung, ca. 30 - 300 Meter Reichweite je nach Bebauung) können bei 10 Trägerfrequenzen und 12 Bursts (Zeitschlitzen) pro Träger insgesamt 120 Handgeräte gleichzeitig betrieben werden. Das DECT-Protokoll sieht eine Vernetzung vieler Basisstationen zu einem Mikrozellular-System vor. Im Privatbereich wird allerdings vom dieser Vernetzungsmöglichkeit in der Regel nicht Gebrauch gemacht, sondern es werden normalerweise mehrere voneinander unabhängige Systeme vorliegen.

Beim Betreten einer benachbarten Funkzelle sorgt ein spezieller DECT-Algorithmus für eine nicht wahrnehmbare Gesprächsübergabe von einer Zelle zur anderen.

Gemäß dem DECT-System ist - bspw. im Gegensatz zum sog. GSM-System - kein übergeordnetes Management vorgesehen, das die Allokierung von Kanälen steuert. Die Allokierung erfolgt vielmehr unabhängig voneinander durch Messungen.

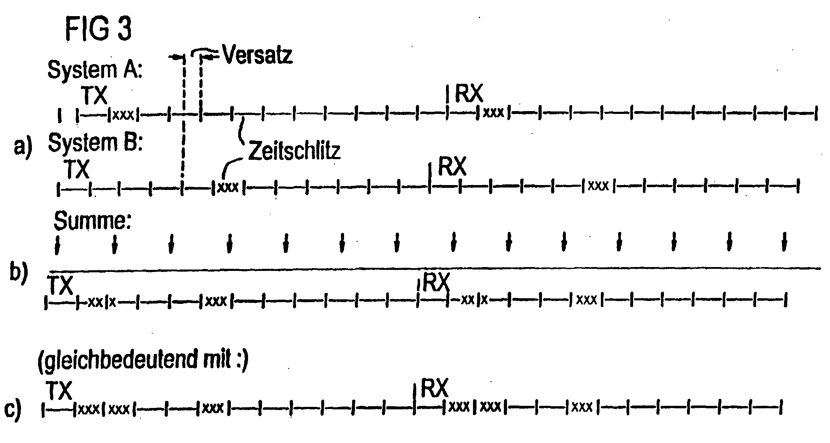

Es können Probleme dadurch entstehen, daß DECT-Systeme, welche sich gemeinsam ein Spektrum teilen, in der Regel nicht synchron sind, so daß sich die Sende-/Empfangszeitschlitze der TDMA-Rahmen überschneiden. Dieses Problem soll im folgenden bezugnehmend auf Fig. 3 der Zeichnungen näher erläutert werden. In Fig. 3a sind zwei Systeme A und B dargestellt, die jeweils einen Zeitschlitz einer selben Frequenz F_{N} belegen.

Unter einem System ist dabei wenigstens eine Basisstation zu verstehen, an die Mobilstationen anbindbar sind. Wie in Fig. 3a ersichtlich wird bei dem System A der zweite Zeitschlitz. des Rahmens jeweils zur Aussendung bzw. zum Empfang verwendet. Bei dem System B wird jeweils der sechste Zeitschlitz zum Empfang bzw. Senden verwendet. Wie aus Fig. 3 auch ersichtlich ist, sind die beiden Systeme A, B zueinander nicht synchron, d.h. die Zeitschlitze und somit auch die Rahmen der Systeme A, B weisen einen zeitlichen Versatz auf. Dieser Versatz kann maximal die Hälfte eines Zeitschlitzes betragen. Bei dem DECT-Standard ist die Länge eines Zeitschlitzes K 416 µsek., wodurch ein maximaler Zeitersatz von 208 µs auftreten kann. Wie in Fig. 3b dargestellt ist, sind aus Sicht des Systems B durch das System A aufgrund der Nicht-Synchronisierung der Zeitschlitz- und Rahmenstruktur zwischen dem System A und dem System B nicht nur ein Zeitschlitz belegt, sondern vielmehr zwei. Der Sende-Zeitschlitz des Systems A bzw. der Empfangs-Zeitschlitz überlappt nämlich jeweils mit zwei Zeitschlitzen des Systems B. Umgekehrt überlappt ein Zeitschlitz des Systems B mit zwei Zeitschlitzen des Systems A. Wie in Fig. 3c ersichtlich, sind somit aus der Sicht des Systems B durch das System A im Sende- sowie im Empfangsbereich des Rahmens je zwei. Zeitschlitze störend belegt.

Aus der DE-A-19 630 048 ist ein Verfahren und eine Anordnung zum Betrieb von TDMA-Funksystemen bekannt. Gemäß diesem Dokument wird eine in einem erstem TDMA-Funksystem auftretende Störung, die durch mangelnde Synchronität der Zeitbasen des ersten und wenigstens eines weiteren TDMA-Funksystems bedingt ist, zunächst als solche erkannt. Die Behebung der Störung erfolgt dann, indem die Zeitbasen der sich gegenseitig beeinflussenden asynchronen TDMA-Systeme zwangssynchronisiert werden. Dazu wird die Frequenz der Zeitbasis zumindest eines von je zwei an der Störung beteiligten TDMA-Funksystemen so angepaßt, daß die Zeitbasen der TDMA-Funksysteme gleich laufen. Zum einen wird damit durch die mit der Frequenzanpassung verbundene einmalige Verschiebung der TDMA-Rahmen der Systeme gegeneinander die zeitliche Überlappung der jeweils einer bestehenden Verbindung zugeordneten Zeitbereiche beseitigt und so die aufgetretene Störung behoben. Zum anderen wird durch die Zwangssynchronisation auch ein weiteres zeitliches Driften der zugehörigen TDMA-Rahmen gegeneinander und damit die Ursache möglicher weiterer Störungen von vornherein unterbunden. Auch wenn aus diesem Stand der Technik bekannt ist, zwei TDMA-Funksysteme aufeinander zu synchronisieren, so besteht doch weiterhin das Problem, wie eine Synchronisierung erfolgen kann, wenn mehrere Funksysteme direkt oder indirekt miteinander überlappen und womöglich ein Funksystem dieses derart gebildeten Verbundes an sich überlappenden Funksystemen so ausgebildet ist, daß es die Lage seiner Zeitschlitze nicht verschieben kann.

Aus der US 5,528,597 und der IEEE-Publikation "Y. Akaiwa, H. Andoh und T. Kohama: Autonomous Decentralized Inter-Base-Station Synchronization for TDMA Microcellular Systmems", 1991, S. 257 bis 262 ist jeweils ein Verfahren zur Synchronisierung von mehreren Funkübertragungssystemen, die jeweils wenigstens aus einer Daten in Zeitschlitzen sendenden/empfangenden Basisstation bestehen, bekannt, bei dem von einem ersten System die folgenden Schritte durchgeführt werden:
Erfassen, ob sich ein oder mehrere weitere aktive Systeme in Empfangs-/Sende-Reichweite befinden,
Erfassen der relativen zeitlichen Versätze der Zeitschlitze von jedem der weiteren aktiven Systeme in Sende-/Empfangsreichweite bezüglich der Zeitschlitze des ersten Systems, Speichern der erfaßten relativen zeitlichen Versätze und Verschieben der zeitlichen Lage der Zeitschlitze des ersten Systems derart, daß die Anzahl der erfaßten zeitlichen Versätze minimiert wird.

Aus der WO 94/28643 ist eine Basisstation für ein zellulares TDMA-Funknetzwerk bekannt, bei dem die Basisstation mit anderen Basisstationen in dem. Funknetzwerk synchronisiert ist. Für die Synchronisierung weist die Basisstation ein zusätzliches Funkempfangsteil auf, mit dem es TDMA-Signale von mindestens einer vorgegebenen zu ihr benachbarten Basisstation empfangen und auswerten kann.

Die vorliegende Erfindung hat daher zur Aufgabe, ein Verfahren und eine Basisstation zur Funkübertragung vorzusehen, die eine Synchronisierung einer Vielzahl von sich überlappenden, einen Verbund bildenden Funksystemen ermöglichen. Dies soll insbesondere auch dann gewährleistet sein, wenn an dem Verbund ein Funksystem beteiligt ist, das die Lage seiner Zeitschlitze nicht verschieben kann.

Die oben genannte Aufgabe wird durch die Merkmale der unabhängigen Ansprüche gelöst.

Gemäß der Erfindung ist also ein Verfahren zur Synchronisierung von mehreren Funkübertragungssystemen vorgesehen, die jeweils aus einer Basisstation und wenigstens einem Mobilteil bestehen, zwischen denen Daten in Zeitschlitzen übertragen werden. Bei dem Funkübertragungssystemen kann es sich insbesondere um solche handeln, die den DECT-Standard verwenden. Gemäß der Erfindung erfaßt dabei ein erstes System zuerst, ob sich ein oder mehrere weitere aktive Systeme in Empfangs-/Sendereichweite befinden. Aktive Systeme sind dabei solche Systeme, bei denen die Basisstation wenigstens in dem Zustand ist, daß sie einen sogenannten Dummy-Träger aussendet, um Mobilstationen die Synchronisierung und die Registrierung an diese Basisstation zu ermöglichen. Bei einem aktiven System kann, muß aber noch keine Kommunikation mit einem Mobilteil stattfinden. Wenn ein Mobilteil registriert und somit an die Basisstation angebunden ist, kann eine Kommunikation zwischen der Basisstation und dem Mobilteil stattfinden. Weiterhin wird erfaßt, wie die Zeitschlitze von jedem der erfaßten weiteren aktiven Systeme in Sende-/Empfangsreichweite bezüglich der Zeitschlitze des ersten Systems versetzt sind. Diese erfaßten relativen zeitlichen Versätze zwischen den Zeitschlitzen der weiteren aktiven Systeme bzw. den Zeitschlitzen des ersten Systems werden gespeichert. Dann wird die zeitliche Lage der Zeitschlitze des ersten Systems aufgrund eines Algorithmus durch Anheben oder Absenken einer Grundfrequenz des ersten Systems verändert.

Die zeitliche Lage der Zeitschlitze wird dabei nicht abrupt geändert, da bei einer abrupten Änderung der zeitlichen Lage der Zeitschlitze das Mobilteil nicht folgen könnte. In diesem Zeitraum, in dem das Mobilteil also die Synchronisierung verloren hat, kann es keine Anrufe von der Basisstation entgegennehmen oder zu dieser absenden. Gemäß der Erfindung wird dagegen das Mobilteil bei der Änderung der zeitlichen Lage der Zeitschlitze mitgezogen und ist somit immer erreichbar.

Ein System kann dabei die zeitliche Lage seiner Zeitschlitze fest beibehalten, wobei sich dann alle übrigen Systeme in Sende-/Empfangsreichweite auf dieses System mit festen Zeitschlitzen synchronisieren. Dies ist insbesondere von Vorteil, wenn also ein System mit "veralteter" Technik in Sende/Empfangsreichweite vorliegt, das noch nicht über die Möglichkeit verfügt, die Lage seiner Zeitschlitze gezielt driften zu. lassen. Dieses System gibt somit die Synchronisierung für die anderen Systeme vor, die in der Lage sind, die Lage ihrer Zeitschlitze driften (verschieben) zu lassen.

Es können auch mehrere Systeme vorgesehen werden, die die zeitliche Lage ihrer Zeitschlitze fest beibehalten, wobei dann die Übrigen Systeme mit veränderbaren Zeitschlitzen jeweils die zeitliche Lage ihrer Zeitschlitze so verändern, daß die Summe der zeitlichen Versätze bezüglich der Zeitschlitze der Systeme mit festen Zeitschlitzen minimiert wird.

Die oben genannten Synchronisierungs-Schritte können automatisch wiederholt werden, wenn ein System in Sende-/Empfangsreichweite hinzukommt oder entfernt wird, wodurch sich eine dynamische Anpassung der Systeme an die neuen Gegebenheiten ergibt. Insbesondere kann die "Überwachung" der zeitlichen Lage der weiteren aktiven Systeme in Sende-/Emfangsreichweite kontinuierlich durchgeführt werden.

Erfindungsgemäß ist weiterhin eine Basisstation zur Funkkommunikation mit einem Mobilteil in einem Funkübertragungssystem gemäß einem TDMA-Format vorgesehen. Die Basisstation weist dabei eine Einrichtung auf, die erfaßt, ob sich weitere aktive Systeme in Sende-/Empfangsreichweite befinden, und die gegebenenfalls die relativen zeitlichen Versätze der Zeitschlitze von jedem der weiteren aktiven Systeme in Sende/Empfangsreichweite bezüglich der Basisstation erfaßt. Gemäß der Erfindung ist eine Einrichtung zur Speicherung der erfaßten relativen zeitlichen Versätze sowie eine Einrichtung zum Verändern der zeitlichen Lage der Zeitschlitze der Basisstation durch eine Anhebung oder Absenkung einer Grundfrequenz des Funkübertragungssystems.

Insbesondere kann die Basisstation eine Berechnungseinrichtung aufweisen, die den Speicherinhalt der Speichereinrichtung anhand eines Optimierungs-Algorithmus auswertet und ein Minimierungssignal zu der Einrichtung zum Verändern der zeitlichen Lage der Zeitschlitze gibt. Die Erfindung wird nun anhand eines Ausführungsbeispiels und bezugnehmend auf die begleitenden Figuren näher erläutert. Es zeigen:
Fig. 1 den inneren Aufbau einer erfindungsgemäßen Basis-station zur Funkkommunikation mit einem Mobilteil gemäß einem TDMA-Format,
Fig. 2 das bekannte DECT-Signalformat,
Fig. 3 eine graphische Darstellung zur Erläuterung der Probleme, die auftreten, wenn zwei Systeme in überlappenden Reichweiten miteinander nicht synchronisiert sind,
Fig. 4 einen Verbund bestehend aus mehreren sich überlappenden Funkkommunikationssystemen, und
Fig.5 eine Grundfrequenz-Anhebung/Absenkung gemäß der vorliegenden Erfindung.

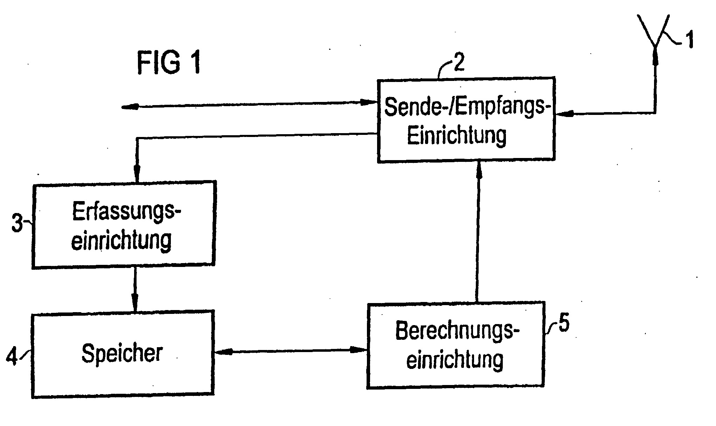

In Fig. 1 ist der Aufbau einer erfindungsgemäßen Basisstation dargestellt. Wie dargestellt empfängt bzw. sendet die Basis-station Daten zu bzw. von einer Mobilstation mittels einer Antenne 1. Die empfangenen Daten werden einer Sende-/Empfangseinrichtung 2 zugeführt, die die empfangenen Daten in der üblichen Weise verarbeitet (Demodulation etc.). Gemäß der Erfindung werden die ausgewerteten Daten neben der üblichen Weitergabe beispielsweise zur Decodierung auch einer Erfassungseinrichtung 3 zugeführt. Die Erfassungseinrichtung 3 erfaßt dabei, ob in den anderen als durch die eigene Basis-station selbst verwendeten Zeitschlitze eines Rahmens Störungen vorliegen. Störung in diesem Sinne ist dabei jegliches auf die von der Sende-/Empfangseinrichtung 2 zur Zeit verwendete Trägerfrequenz fx aufmoduliertes Signal. Die Erfassungseinrichtung 3 kann somit insbesondere erfassen, in welchen Zeitschlitzen Störungen durch ein anderes System vorliegen, das sich in Sende-/Empfangsreichweite der eigenen Basisstation befindet. Natürlich kann die Erfassungseinrichtung 3 somit auch erfassen, daß sich mehrere weitere Systeme bestehend aus einer Basisstation und wahlweise einem oder mehreren Mobilteilen in Sende-/Empfangsreichweite der eigenen Basisstation befinden. Die Erfassungseinrichtung 3 erfaßt also auch Basis-stationen ohne angebundenes Mobilteil, die sogenannte Dummy-Träger senden, um einem Mobilteil die Synchronisierung und Registrierung an diese Basisstation zu ermöglichen. Die Erfassungsergebnisse der Erfassungseinrichtung 3 werden in einem Speicher 4 abgelegt.

Normalerweise sind zwei Systeme miteinander hinsichtlich ihres Zeitschlitz- bzw. Rahmenformats nicht synchronisiert, so daß sich wie eingangs bezugnehmend auf Fig. 3 erläutert ein Überlapp zwischen Zeitschlitzen eines Systems mit zwei Zeitschlitzen eines anderen Systems ergeben wird. Die Erfassungseinrichtung 3 erfaßt auch diesen Überlapp, d.h. den zeitlichen Versatz der zeitlichen Lage der Zeitschlitze der weiteren aktiven Systeme in Sende-/Empfangsreichweite der eigenen Basisstation, und legt eine dementsprechende Information in den Speicher 4 ab. In dem Speicher 4 liegen also Informationen vor, die anzeigen, welche weiteren Systeme sich in Sende/Empfangsreichweite der eigenen Basisstation befinden und weiterhin, wie die zeitliche Lage, d.h. der Versatz der weiteren aktiven Systeme in Sende-/Empfangsreichweite bezüglich der zeitlichen Lage der Zeitschlitzstruktur der eigenen Basisstation ist.

Eine Berechnungseinrichtung 5 greift auf den Inhalt des Speichers 4 zu. In der Berechnungseinrichtung 5 ist ein Algorithmus vorgesehen, der berechnet, wie die zeitliche Lage der Zeitschlitze der eigenen Basisstation zu verschieben sind, um die Anzahl aller in dem Speicher 4 abgespeicherten zeitlichen Versätze der weiteren aktiven Systeme in Sende-/Empfangsreichweite bezüglich der Zeitschlitze der eigenen Basisstation zu minimieren, d.h. im Idealfall die Summe der Versätze auf Null zu bringen.

Wenn nämlich die zeitliche Lage der Zeitschlitze der eigenen Basisstation so verschoben werden, daß die Anzahl und Summe der in dem Speicher 4 abgelegten zeitlichen Versätze Null wird, bedeutet dies, daß die eigene Basisstation mit allen übrigen aktiven Systemen in Sende-/Empfangsreichweite synchronisiert ist.

Die Berechnungseinrichtung 5 berechnet also anhand dieses Minimierungs-Algorithmus die Verschiebung der zeitlichen Lage der Zeitschlitze der eigenen Basisstation und gibt ein dementsprechendes Verschiebungssignal an die Sende-/Empfangseinrichtung 2. Beispielsweise gemäß dem DECT-Standard ist es möglich, in gewissen Grenzen (ca. 5 ppm bezogen auf einen Rahmen) die Trägerfrequenz anzuheben bzw. abzusenken. Durch iterative Anhebung bzw. Absenkung der Trägerfrequenz der Sende-/Empfangseinrichtung 2 kann somit die zeitliche Lage der eigenen Zeitschlitze langfristig verändert werden. Die Frequenzänderung findet dabei vorteilhafterweise in einem Zeitfenster statt, in dem in dem DECT-System keine Datenübertragung stattfindet, beispielsweise die Felder X und Z mit jeweils 4 Bit Länge am Ende eines Bitrahmens, in denen keine Daten übertragen werden.

Die Frequenzänderung findet vorzugsweise zeitlich befristet statt.

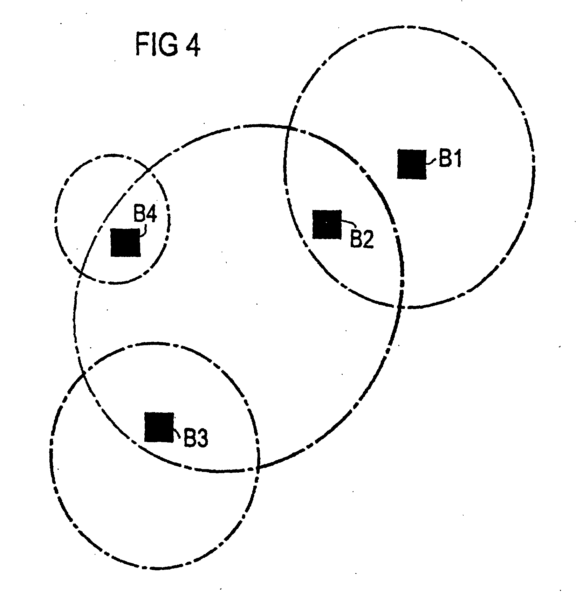

Bezugnehmend auf Fig. 4 soll nunmehr erläutert werden, wie erfindungsgemäß ein Verbund bestehend aus mehreren sich überlappenden Funkübertragungssystemen miteinander synchronisiert werden kann. In Fig. 4 sind mehrere Basisstationen B1, B2, B3, B4 sowie jeweils ihre Sende-/Empfangsreichweite dargestellt. Wie dargestellt überlappen somit die Basisstation B1 mit der Basisstation B2. Die Basisstation B2 überlappt mit der Basis-station B1, B3 und B4. Die Basisstation B1 und beispielsweise die Basisstation B3 gehören somit zu demselben Verbund, da sie indirekt mittels der Basisstation B2 verbunden sind.

Jede der DECT-Basisstationen B1, B2, B3, B4 "horcht" also periodisch nach fremden DECT-Basisstationen in Sende-/Empfangsreichweite. Für jedes ermittelte aktive System wird dessen Rahmenlage (Zeitversatz) ermittelt. Der Zeitversatz kann maximal die Dauer eines halben Zeitschlitzes betragen, bei dem DECT-Standard also maximal 213 µsek.. Die Zeitversätze aller empfangbaren Nachbar-Basisstationen werden gespeichert und ausgewertet. Danach errechnet ein geeigneter Minimierungs-Algorithmus, wie das eigene System "Driften" suchen muß, um mit den anderen Basisstationen synchron zu werden. Unter Driften ist dabei eine iterative geringfügige Anhebung bzw. Absenkung der Trägerfrequenz zu verstehen. Bei dem DECT-Standard ist eine Drift von 5 ppm erlaubt. Diese Änderung ist so bemessen, daß sie ein gegebenfalls angebundenes Mobilteil auf jeden Fall nachvollziehen kann, ohne die Synchronisierung mit der Basistation zu verlieren.

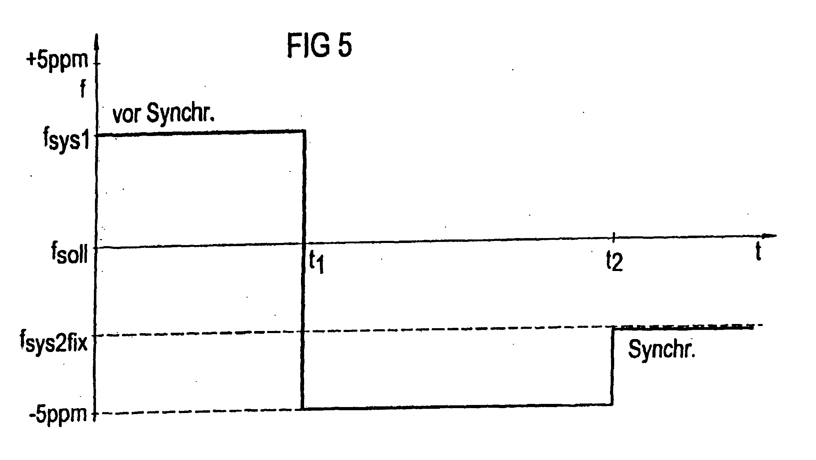

Fig 5 zeigt, wie erfindungsgemäß die Grundfrequenz angehoben oder abgesenkt wird, um eine Synchronisierung mehrerer überlappender Systeme zu schaffen. Als Beispiel sei der Fall gewählt, daß ein System 1, das seine Grundfrequenz ändern kann, mit einem System 2 überlappt, das seine Grundfrequenz nicht verändern kann, also driftfest ist. Vor einem Zeitpunkt t₁ ist die Frequenz f_{SYS1} des ersten Systems 1 höher als die des Systems 2. Die beiden Systeme 1,2 sind also nicht synchronisiert, Zu einem Zeitpunkt t₂ gibt dann der Algorithmus des Systems 1 einen Korrekturwert aus, um die Grundfrequenz f_{SYS1} des Systems 1 um den maximal erlaubten Wert, nämlich bis auf (f_{SOLL} - 5ppm) abzusenken. Diese Frequenz (f_{SOLL} - 5ppm) wird von dem System 1 solange beibehalten, bis erfaßt wird, daß zum Zeitpunkt t₂ kein zeitlicher Versatz mehr zwischen den Zeitschlitzen des Systems 1 und denen des System 2 vorliegt. zu diesem Zeitpunkt t2 wird dann aufgrund des Algorithmus des Systems 1 die Frequenz f_{SYS1} leicht auf die Frequenz f_{SYS2} des Systems 2 angehoben. Dieser synchronisierte zustand wird dann sozusagen solange "eingefroren", bis der Algorithmus des Systems 1 neuerlich einen Korrekturwert ausgibt. Natürlich kann zur Korrektur das System 1 die Änderung der zeitlichen Lage seiner Zeitschlitze gegebenenfalls auch durch Anheben seiner Grundfrequenz auf den maximal erlaubten Wert (f_{SOLL} - 5ppm) anheben.

Gemäß der Erfindung ist das oben ausgeführte Korrekturverhalten eines Systems nicht auf die Dauer bspw. eines Gesprächs beschränkt, sondern kann z.B. auch in dem Zeitraum durchgeführt werden, in dem eine Basisstation nur einen Dummy-Träger sendet, um die Anbindung eines Mobilteils zu ermöglichen.

Nach einer gewissen Zeit werden somit alle Systeme eines Verbundes, die ein solches Verfahren ausführen können, synchron sein. Als Verbund ist dabei eine Anzahl an Systemen zu verstehen, für die gilt, daß die eigene Zelle (also die Sende-/Empfangsreichweite) mit einer oder mehreren Zellen anderer Systeme überlappt. Dabei muß wie in Fig. 4 dargestellt nicht jede Zelle mit jeder anderen überlappen, d.h. nicht alle Systeme eines Verbundes brauchen sich. gegenseitig zu "sehen". Ein Verbund über Dritte reicht aus, wie es beispielsweise zwischen der Basisstation B1 und B3 von Fig. 4 ist, die über die dritte Basisstation B2 miteinander verbunden sind.

Ein Verbund kann somit aus einer beliebigen Anzahl aus Einzelsystemen bestehen.

Erfindungsgemäß kann sich das Verfahren dynamisch neuen Begebenheiten anpassen. Diese neuen Begebenheiten können dabei im Abschalten von Systemen, im Hinzufügen von Systemen oder dergleichen bestehen. Jedesmal wenn eine solche Änderung eines Verbundes erfolgt, werden automatisch die oben ausgeführten Synchronisierungsschritte wieder ausgeführt, bis der abgeänderte Verbund wieder untereinander synchronisiert ist.

Selbstverständlich können auch mehrere in sich synchrone, jedoch untereinander asynchrone Verbunde auftreten, nämlich dann, wenn keines der Systeme eines Verbundes ein System des Nachbarverbundes sehen kann. Dies ist insoweit nicht störend, da sich die Systeme in diesem Fall auch nicht stören können, d.h. kein System eines Verbundes kann einen Zeitschlitz eines Systems eines anderen Verbundes blockieren. Zwei asynchrone Verbunde werden indessen zueinander synchron, wenn sie durch Hinzufügen eines weiteren Systems miteinander indirekt verbunden werden.

Gemäß der Erfindung ist auch eine Synchronisierung eines Verbundes möglich, wenn in dem Verbund ein driftfestes System vorliegt, also ein System, das die zeitliche Lage seiner Zeitschlitze durch iterative Erhöhung bzw. Erniedrigung der Trägerfrequenz nicht verändern kann. In diesem Fall synchronisieren sich sämtliche Systeme auf das driftfeste System auf. Dabei synchronisieren sich auch solche Systeme auf das driftfeste System auf, die das driftfeste System selbst nicht empfangen können, aber mit diesem indirekt verbunden sind. Wenn in einem Verbund mehrere driftfeste Systeme vorliegen, können die Asynchronitäten, d.h. die Summe der Zeitversätze in der Regel nicht auf Null minimiert werden, aber der Algorithmus in der Berechnungseinrichtung 5 einer jeden erfindungsgemäßen Basisstation, die die zeitliche Lage ihrer Zeitschlitze verändern kann, ist so ausgebildet, daß die Summe der in der Speichereinrichtung 4 abgespeicherten zeitlichen Versätze minimiert wird.

Durch das erfindungsgemäße Verfahren, bzw. die erfindungsgemäße Basisstation wird somit eine effizientere Nutzung von Kanälen einer Zeitschlitz-Struktur ermöglicht.

## Patentansprüche

1. Verfahren zur Synchronisierung von mehreren Funkübertragungssystemen, die jeweils wenigstens aus einer Basisstation bestehen, die Daten in Zeitschlitzen senden/empfangen kann, wobei ein erstes System die folgenden Schritte durchführt:
(a) Erfassung (3), ob sich ein oder mehrere weitere aktive Systeme in Empfangs-/Sende-Reichweite befinden, und
(b) Erfassung (3) der relativen zeitlichen Versätze der Zeitschlitze von jedem der weiteren aktiven Systeme in Sende-/Empfangsreichweite bezüglich der Zeitschlitze des ersten Systems,
(c) Speicherung (4) der erfaßten relativen zeitlichen Versätze, und
(d) Verändern (5) der zeitlichen Lage der Zeitschlitze des ersten Systems durch eine Anhebung oder Absenkung einer Grundfrequenz des ersten Systems.

2. Verfahren nach Anspruch 1,
**dadurch gekennzeichnet,**
**daß** ein System die zeitliche Lage seiner Zeitschlitze fest beibehält und sich alle übrigen Systeme auf dieses System synchronisieren.

3. Verfahren nach Anspruch 1,
**dadurch gekennzeichnet,**
**daß** mehrere Systeme vorgesehen werden, die die zeitliche Lage ihrer Zeitschlitze fest beibehalten und die übrigen Systeme mit veränderbaren Zeitschlitzen jeweils die zeitliche Lage ihrer Zeitschlitze so verändern, daß die Anzahl der zeitlichen Versätze bezüglich der Zeitschlitze der Systeme mit festen Zeitschlitzen minimiert wird.

4. Verfahren nach einem der vorhergehenden Ansprüche,
**dadurch gekennzeichnet,**
**daß** die Synchronisierungs-Schritte automatisch wiederholt werden, wenn ein System in Sende-/Empfangs-Reichweite hinzukommt oder entfernt wird.

5. Verfahren nach Anspruch 1,
**dadurch gekennzeichnet,**
**daß** die Anhebung oder Absenkung der Grundfrequenz so bemessen ist, daß die Synchronisierung mit einem angebundenen Mobilteil nicht verloren geht.

6. Verfahren nach Anspruch 1 oder 5,
**dadurch gekennzeichnet,**
**daß** nach Erreichen der minimalen Anzahl an zeitlichen Versätzen von Zeitschlitzen die Grundfrequenz nicht mehr verändert wird.

7. Basisstation zur Funkkommunikation in einem Funkübertragungssystem gemäß einem TDMA-Format,
mit folgenden Merkmalen:
(a) eine Einrichtung (3), die erfaßt, ob sich weitere aktive Systeme in Empfangs-/Sende-Reichweite befinden, und die ggf. die relativen zeitlichen Versätze der Zeitschlitze von jedem der weiteren aktiven Systeme in Sende-/Empfangsreichweite bezüglich der Basisstation erfaßt,
(b) eine Einrichtung (4) zur Speicherung der erfaßten relativen zeitlichen Versätze, und
(c) eine Einrichtung (5) zum Verändern der zeitlichen Lage der Zeitschlitze der Basisstation durch eine Anhebung oder Absenkung einer Grundfrequenz des Funkübertragungssystems.

8. Basisstation nach Anspruch 7,
**dadurch gekennzeichnet,**
**daß** die Veränderungseinrichtung eine Berechnungseinrichtung (5) aufweist, die den Inhalt der Speichereinrichtung (4) anhand eines Minimierungs-Algorithmus auswertet.

## Claims

1. Method for synchronization of a number of radio transmission systems which each have at least one base station which can transmit/receive data in timeslots, with a first system carrying out the following steps:
(a) Detection (3) of whether one or more further active systems are located in the reception/transmission range, and
(b) Detection (3) of the relative time offsets between the timeslots from each of the further active systems in the transmission/reception range with respect to the timeslots of the first system,
(c) Storage (4) of the detected relative time offsets, and
(d) Changing (5) the timing of the timeslots in the first system by raising or lowering a fundamental frequency in the first system.

2. Method according to Claim 1,
**characterized in that**
one system retains the timing of its timeslots in a fixed manner, and all the other systems are synchronized to this system.

3. Method according to Claim 1,
**characterized in that**
a number of systems are provided, which retain the timing of their timeslots in a fixed manner, and the other systems with variable timeslots each change the timing of their timeslots such that the number of time offsets with respect to the timeslots of the systems with fixed timeslots is minimized.

4. Method according to one of the preceding claims,
**characterized in that**
the synchronization steps are repeated automatically when a system comes into or is removed from the transmission/reception range.

5. Method according to Claim 1,
**characterized in that**
the raising or lowering of the fundamental frequency is dimensioned such that the synchronization with a linked mobile part is not lost.

6. Method according to Claim 1 or 5,
**characterized in that**,
once the minimum number of time offsets of timeslots has been reached, the fundamental frequency is no longer changed.

7. Base station for radio communication in a radio transmission system using a TDMA format, having the following features:
(a) a device (3) which detects whether any further active systems are located in the transmission/reception range, and which, if appropriate, detects the relative time offsets of the timeslots of each of the further active systems in the transmission/reception range with respect to the base station,
(b) a device (4) for storing the detected relative time offsets, and
(c) a device (5) for varying the timing of the timeslots of the base station by raising or lowering a fundamental frequency in the radio transmission system.

8. Base station according to Claim 7,
**characterized in that**
the variation device has a calculation device (5) which uses a minimization algorithm to evaluate the contents of the memory device (4).

## Revendications

1. Procédé pour la synchronisation de plusieurs systèmes de transmission radio qui sont constitués chacun d'au moins une station de base qui peut recevoir et émettre des données dans des créneaux temporels, un premier système effectuant les étapes suivantes :
(a) détection (3) pour savoir si un ou plusieurs autres systèmes actifs se trouvent à portée d'émission et de réception, et
(b) détection (3) des décalages temporels relatifs des créneaux temporels de chacun des autres systèmes actifs à portée d'émission et de réception par rapport aux créneaux temporels du premier système,
(c) mémorisation (4) des décalages temporels relatifs détectés, et
(d) modification (5) de la position temporelle des créneaux temporels du premier système par une augmentation ou une diminution d'une fréquence de base du premier système.

2. Procédé selon la revendication 1,
**caractérisé par le fait qu'**un système conserve la position temporelle de ses créneaux temporels et que tous les autres systèmes se synchronisent sur ce système.

3. Procédé selon la revendication 1,
**caractérisé par le fait qu'**on prévoit plusieurs systèmes qui conservent la position temporelle de leurs créneaux temporels et que les autres systèmes à créneaux temporels variables modifient chacun la position temporelle de leurs créneaux temporels de manière à minimiser le nombre des décalages temporels par rapport aux créneaux temporels des systèmes à créneaux temporels fixes.

4. Procédé selon l'une des revendications précédentes,
**caractérisé par le fait qu'**on répète automatiquement les étapes de synchronisation lorsqu'un système est ajouté ou supprimé à portée d'émission et de réception.

5. Procédé selon la revendication 1,
**caractérisé par le fait que** l'augmentation ou la diminution de la fréquence de base est dimensionnée de telle sorte que la synchronisation avec une station mobile rattachée n'est pas perdue.

6. Procédé selon la revendication 1 ou 5,
**caractérisé par le fait que**, après avoir atteint le nombre minimal de décalages temporels, on ne modifie plus la fréquence de base.

7. Station de base pour la communication par radio dans un système de transmission radio selon un format TDMA,
ayant les caractéristiques suivantes :
(a) un dispositif (3) qui détecte si d'autres systèmes actifs se trouvent à portée d'émission et de réception et qui, le cas échéant, détecte les décalages temporels relatifs des créneaux temporels de chacun des autres systèmes actifs à portée d'émission et de réception par rapport à la station de base,
(b) un dispositif (4) pour mémoriser les décalages temporels relatifs détectés, et
(c) un dispositif (5) pour modifier la position temporelle des créneaux temporels de la station de base par une augmentation ou une diminution d'une fréquence de base du système de transmission radio.

8. Station de base selon la revendication 7,
**caractérisée par le fait que** le dispositif de modification comporte un dispositif de calcul (5) qui évalue le contenu du dispositif de mémoire (4) à l'aide d'un algorithme de minimisation.
